# EUROPEAN PATENT SPECIFICATION

(11) **EP 0 579 386 B1**
(45) Date of publication and mention of the grant of the patent: **24.04.2002**
(21) Application number: 93304749.0
(22) Date of filing: 17.06.1993
(51) Int. Cl.: A01D 43/06

(54) **Grass cutting machines**
Rasenmäher
Tondeuses à gazon

(30) Priority: 14.07.1992 GB 9214930
(43) Date of publication of application: 19.01.1994
(73) Proprietor: ELECTROLUX OUTDOOR PRODUCTS LIMITED, Newton Aycliffe, Co Durham DL5 6UP (GB)
(72) Inventor: Bowden, Michael, Newton Aycliffe, Co Durham, DL5 4RS (GB); Stocker, Malcolm, Darlington DL3 8JP (GB)
(74) Representative: Wright, Howard Hugh Burnby

(56) References cited:
- EP-A- 0 037 871
- EP-A- 0 045 177
- EP-A- 0 457 433
- EP-A- 0 481 655
- EP-A- 0 501 674
- EP-A- 0 542 459
- US-A- 3 293 836
- US-A- 4 738 086

## Description

This invention relates to grass cutting machines. Throughout this specification and claims, the term "grass cutting machine" is used to include domestic lawn mowers and commercial grass cutting machines normally used for cutting larger areas of grass such as sports fields and parkland as well as grass verges.

There are two main types of grass cutting machine currently in production namely (1) a machine including a cutting system rotatable about an axis which is substantially vertical relative to ground datum, and (2) a machine having a cylindrical cutting unit which includes a plurality of blades and which, in operation, is rotatable about an axis which is substantially parallel to ground datum, i.e. horizontal. Type (1) machines may be supported relative to ground datum by a cushion of air (commonly called a hover machine), by wheels (commonly called a wheeled rotary machine) or a combination thereof. A rear roller may also be used in order to produce a striped effect upon cut grass. Type (2) is normally supported on a combination of wheels and rollers. However, in prior US Patent No. 4,738,086, there is described and claimed a type (2) machine which is supported on a cushion of air.

Collection of grass cut by any type of grass cutting machine is a problem confronting all design engineers working in this field and, in our prior European Patent No. 0037871, B1 there is described and claimed a lawn mower of the type which in operation is supported by a cushion of air and has a knife rotatable about a vertical axis and a fan wheel rotatable about the same axis, the fan wheel and the knife being shrouded by a hood, the mower having a rim around the hood and the hood having one,or more than one, opening for air to the air cushion, characterised in that at least a part of the air stream to the fan wheel before reaching the fan wheel is used to pick up and transport grass, leaves and the like from the ground to a collecting chamber in the mower, the collecting chamber having means for separating grass from air.

Prior US Patent No. 3,293,836 (Reissued under No. Re 26,816) granted to Sherman C. Heth discloses an air supported lawn mower falling within a hover type 1 machine mentioned above.

In more detail, the Heth mower comprises a wheeless housing having a skirt extending around the lower edge thereof and having an air-inlet opening in the upper portion thereof, a motor disposed above said housing and including rotatable shaft extending therethrough, a grass cutter mounted on said shaft and including grass-cutting blades, air-blowing blades mounted on said grass cutter and disposed above said grass-cutting blades and being oriented toward said skirt for blowing air toward said skirt and air-supporting said mower off the ground, and a shroud mounted on said mower and extending over said housing and being spaced thereabove and with said shroud extending from adjacent said skirt to adjacent said air-inlet opening for receiving air passing said skirt and directing it to said air-inlet opening. It will be appreciated that the Heth mower comprises a double skinned housing - sometimes called a hood - constructed so that the inner skin partially defines a cutting chamber in which both the grass-cutting blades and the air blowing blades are mounted whereas a space between the blades defines an air passage for directing pressurised air from within the cutting chamber back to the inlet.

A specific object of the Heth mower is stated to provide an air-supported lawn mower wherein the air pressure is created by an improved means, and wherein the air pressure is conserved and employed in recycling of the air so that a more efficient mower will be provided, and the air will not be blasted out from the mower housing to create the usual dust and like problems of the escaping air in ground effect machines. The Heth mower does not disclose means for collecting mown grass or other debris such as leaves etc.

European Patent Publication No. 0045177 Al, (Birmid Qualcast) (closest prior art) also discloses a double-skinned mower of type 1 as mentioned above and includes a facility for collecting mown grass and other lawn debris such as leaves etc. The Qualcast mower includes a cutter mounted beneath a deck for rotation about a generally vertical axis, the cutter being disposed in an open-bottomed cutting chamber. An impeller produces a generally downward flow of pressurised air around the outside of the cutting chamber and a proportion of this air flows into the chamber around the bottom bounding edge of the chamber. Air flows out of the cutting chamber through an exit opening communicating with a discharge chute so that grass cuttings are discharged into the chute without interfering with the flow of lift air. The form and nature of a grass collection device into which grass is ejected from the discharge device is not disclosed. However, from a technical point of view, in order to reduce back pressure building up in the device, means must be provided in the grass collection device to allow pressurised air to escape from the collection device. Conventionally, the pressurised air is permitted to escape from the collection device through slots in the device or by making the device from a perforated, for example, a woven material.

It is an object of the present invention to produce a mower which affords improved grass cutting/debris collection with an attendant reduction in dust and the fine air-laden debris escaping into the atmosphere immediately surrounding a mower, thereby reducing potential respiratory problems for a user of the machine.

The scope of the invention is defined in the appended claims.

The invention will now be described by way of example with reference to the accompanying drawings in which :-
Figure 1 is a diagrammatic longitudinal cross-section of a rotary hover grass cutting machine; and
Figure 2 is a similar view of a wheel supported rotary grass cutting machine.

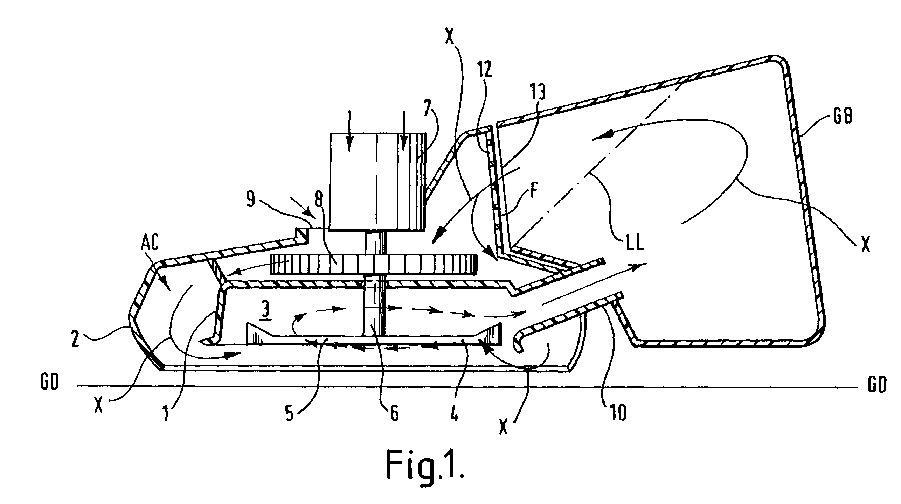

Referring to Figure 1, a housing 1 is supported within an outer shroud 2 to form an air chamber AC therebetween. The housing 1 includes a cutting chamber 3 which opens towards ground datum GD. A rotatable grass cutter 5 is disposed within the cutting chamber 3 and mounted on output drive shaft 6 of a power source 7. Coaxial with the grass cutter 5 and also mounted on the drive shaft 6 is a fan 8 which is located as shown in the part of the air chamber AC above the housing 1. An air inlet 9 is formed in the housing 1 in the vicinity of the motor as shown.

A detachable grass box GB is supported on the outer shroud 2 and access means 10 in the form of a duct establishes direct access between the cutting chamber 3 and the interior of the grass box GB.

A fixed or removable filter F may be installed at a position in an aperture 12 of the outer shroud 2 or in an aperture 13 of the grass box GB. Alternatively, the filter F may be positioned at any suitable position in the grass box, for example at a position indicated by line L-L. A handle not shown may be attached at any convenient position to the shroud 2.

In use, operation of the power source which may be an electric motor or an internal combustion engine, drives the fan 8 and the grass cutter 5. The fan 8 draws air from the atmosphere and directs a pressurised stream of air downwardly through the air chamber AC. The air stream performs the following functions viz
a. it establishes a cushion of air for supporting the mower, and
b. together with the aid of the fan action of the grass cutter, assists in directing cut grass from the cutting chamber directly into the grass box via duct 10.
c. As indicated by flow arrows X, the fan 8 draws air in which grass cuttings are entrained through the filter F and the air is recirculated as indicated.

Recirculation of the pressurised air in a substantially closed loop serves not only to greatly assist in the collection of grass cuttings and other debris (e.g. leaves) but also, at least substantially reduces the tendency for dust to escape from the cutting chamber, shroud and grass box and adversely affecting the respiratory system of a user.

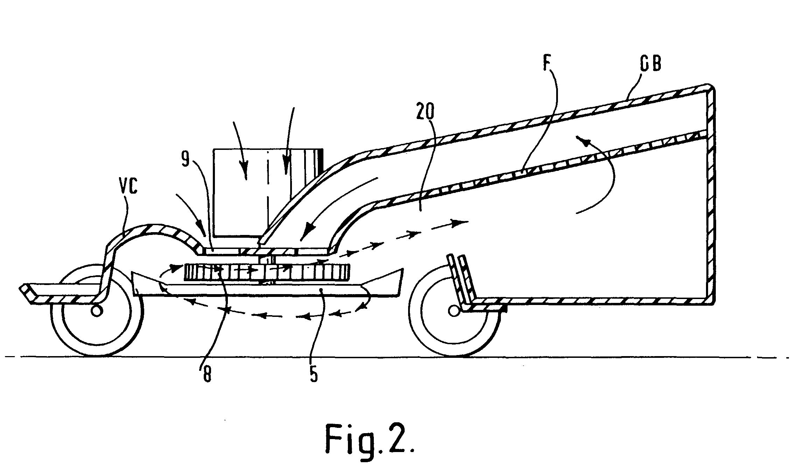

Figure 2 shows a wheeled rotary grass cutting machine employing a similar closed circuit and recycling air system as in Figure 1. In this machine, however, a conventional semi-volute shaped cutting chamber VC is employed having an exit chute 20 for leading entrained grass cuttings directly into the grass box GB. A filter F is located as shown across the grass box to filter the grass cuttings from the pressurised air stream which is drawn into recirculation by the fan 8 through aperture 21. The recirculated air entering through the aperture 21 supplements ambient air drawn into the machine through inlet 9. For convenience and where appropriate, the same reference numerals have been used on the two figures for corresponding parts.

## Claims

1. A grass cutting machine comprising a housing (1) defining a cutting chamber (3) opening towards ground datum, a grass cutter (5) mounted in the cutting chamber (3) for rotation about a substantially vertical axis, a power source (7), a drive line (6) drivingly connecting the power source (7) and the grass cutter (5), a removable grass collector (GB), access means (10) affording direct access between the cutting chamber (3) and the grass collector (GB), at least one fan (8) for producing a stream of pressurised air, and means for directing the pressurised air into the cutting chamber (3) for conveying grass cuttings from the cutting chamber (3) through the access means (10) directly into the grass collector (GB), **characterised by** a filter (F) for retaining the grass cuttings in the grass collector (GB) and by ducting for directing the so filtered air from the grass collector (GB) to the fan (8) for recirculation into the cutting chamber (3).

2. A grass cutting machine comprising a housing defining a cutting chamber (VC) opening towards ground datum, a grass cutter (5) mounted in the cutting chamber (VC) for rotation about a substantially vertical axis, a power source, a drive line drivingly connecting the power source and the grass cutter (5), a removable grass collector (GB), access means (20) affording direct access between the cutting chamber (VC) and the grass collector (GB), at least one fan (8) for producing a stream of pressurised air, the housing being shaped to form means for directing the pressurised air through the cutting chamber (VC) for conveying grass cuttings from the cutting chamber (VC) through the access means (20) directly into the grass collector (GB), wherein a filter (F) for retaining the grass cuttings in the grass collector (GB) and ducting for directing the so filtered air from the grass collector (GB) to the fan (8) for recirculation into the cutting chamber (VC) is provided.

3. A machine according to claim 1, **characterised by** means for constraining the stream of pressurised air to flow downwardly and externally of the housing (1) to form an air cushion for supporting the machine above ground datum (GD).

4. A machine according to claim 3, **characterised by** an outer shroud (2) substantially surrounding the housing (1) and forming an air chamber (AC) therebetween through which chamber the stream of pressurised air is downwardly directed to form the air cushion and to enter the cutting chamber (3).

5. A machine according to claim 4, **characterised in that** the fan (8) is mounted within the air chamber (AC) and wherein the outer shroud (2) includes an inlet (9) for air to be pressurised by the fan (8).

6. A machine according to claim 4 or 5, **characterised in that** air from the air chamber (AC) is drawn into the cutting chamber (3) by a pressure imbalance created during recirculation of pressurised air from the grass collector (GB).

7. A machine according to any one of claims 4 to 6, **characterised in that** the air chamber (AC) constitutes the directing means.

8. A machine according to any one of claims 1 and 3 to 8, **characterised in that** the access means is defined by a duct leading from the cutting chamber (3) to the grass collector (GB).

9. A machine according to claim 2, **characterised in that** the directing means is further constituted by the grass cutter (5).

10. A machine according to any one of claims 1 to 9, **characterised in that** the filter (F) is mounted within grass collector (GB).

11. A machine according to any one of claims 1 to 9, **characterised in that** the filter (F) is mounted in the ducting for directing filtered air from the grass collector (GB) to the fan (F) for recirculation.

12. A machine according to claim 10 or 11, **characterised in that** the filter (F) is removably supported in the grass collector (GB) or the ducting.

13. A machine according to any preceding claim, **characterised in that** the fan (8) and the grass cutter (5) are mounted coaxially on an output drive shaft (6) of the power source (7).

14. A machine according to any preceding claim, **characterised by** wheels for supporting the same on the ground.

15. A machine according to any one of claims 1 to 14, further comprising a roller.

16. A machine according to any one of preceding claims, **characterised in that** the access means includes an aperture in the housing (1).

17. A machine according to any one of claims 2 and 9 to 15, wherein the cutting chamber (3,VC) has a semi volute configuration having an exit chute defining the access means (10,20) into the grass collector (GB).

## Patentansprüche

1. Rasenmäher mit einem Gehäuse (1), welches die zur Ebene des Bodens geöffnete Schnittkammer (3) bestimmt, einem Grasmesser bzw. Messer (5), welches zur Rotation um eine im wesentlichen vertikale Achse in der Schnittkammer (3) befestigt ist, einer Antriebsquelle (7), einer Antriebswelle (6), welche die Antriebsquelle (7) und das Messer (5) antriebsmäßig verbindet, einem entfernbaren Fangkorb (GB), wobei ein Zugangsmittel (10) direkten Zugang zwischen der Schnittkammer (3) und dem Fangkorb (GB) liefert, mindestens einem Gebläse (8) zur Erzeugung einer Druckluftströmung, und Mitteln zum Leiten der Druckluft in die Schnittkammer (3) um das abgeschnittene Gras aus der Schnittkammer (3) durch das Zugangsmittel (10) direkt in den Fangkorb (GB) zu befördern, **gekennzeichnet durch** einen Filter (F) zum Zurückhalten des abgeschnittenen Grases im Fangkorb (GB) und **durch** einen Luftführungskanal zum Leiten der so filtrierten Luft vom Fangkorb (GB) zum Gebläse (8) zur Rückführung in die Schnittkammer (3).

2. Rasenmäher mit einem Gehäuse, welches die zur Ebene des Bodens geöffnete Schnittkammer (VC) bestimmt, einem Messer (5), welches zur Rotation um eine im wesentlichen vertikale Achse in der Schnittkammer (VC) befestigt ist, einer Antriebsquelle, einer Antriebswelle, welche die Antriebsquelle und das Messer (5) antriebsmäßig verbindet, einem entfernbaren Fangkorb (GB), wobei ein Zugangsmittel (20) direkten Zugang zwischen der Schnittkammer (VC) und dem Fangkorb (GB) liefert, mindestens einem Gebläse (8) zur Erzeugung einer Druckluftströmung, wobei die Gehäuseform ein Mittel zum Leiten der Druckluft durch die Schnittkammer (VC) zur Beförderung des abgeschnittenen Grases von der Schnittkammer (VC) durch das Zugangsmittel (20) direkt in den Fangkorb (GB) bildet, wobei der Fangkorb mit einem Filter (F) zum Zurückhalten des abgeschnittenen Grases im Fangkorb (GB) und einem Luftführungskanal zum Leiten der so filtrierten Luft vom Fangkorb (GB) zum Gebläse (8) zur Rückführung in die Schnittkammer (VC) versehen ist.

3. Maschine nach Anspruch 1, **gekennzeichnet durch** Mittel zum zwangweisen Fluß der Druckluftströmung nach unten und zur Außenseite des Gehäuse (1), um ein Luftkissen zur Unterstützung der Maschine oberhalb der Ebene des Bodens (GD) zu bilden.

4. Maschine nach Anspruch 3, **gekennzeichnet durch** ein äußeres Abdeckblech (2), welches im wesentlichen das Gehäuse (1) umgibt und dazwischen eine Luftkammer (AC) bildet, **durch** die die Druckluftströmung nach unten geleitet wird, um das Luftkissen zu bilden und in die Schnittkammer (3) zu fließen.

5. Maschine nach Anspruch 4, **dadurch gekennzeichnet, dass** das Gebläse (8) innerhalb der Luftkammer (AC) befestigt ist und worin das äußere Abdeckblech (2) eine Einlaßöffnung (9) zur Verdichtung der Luft durch das Gebläse (8) enthält.

6. Maschine nach Anspruch 4 oder 5, **dadurch gekennzeichnet, dass** Luft aus der Luftkammer (AC) durch ein während der Rückführung der Druckluft aus dem Fangkorb (GB) entstandenes Druckgefälle in die Schnittkammer (3) gezogen wird.

7. Maschine nach einem der Ansprüche 4 bis 6, **dadurch gekennzeichnet, dass** die Luftkammer (AC) das Mittel zum Leiten der Luft bildet.

8. Maschine nach einem der Ansprüche 1 und 3 bis 8, **dadurch gekennzeichnet, dass** das Zugangsmittel durch eine Kanalleitung von der Schnittkammer (3) zum Fangkorb (GB) definiert ist.

9. Maschine nach Anspruch 2, **dadurch gekennzeichnet, dass** das Mittel zum Leiten darüber hinaus aus dem Messer (5) gebildet ist.

10. Maschine nach einem der Ansprüche 1 bis 9, **dadurch gekennzeichnet, dass** der Filter (F) innerhalb des Fangkorbs (GB) befestigt ist.

11. Maschine nach einem der Ansprüche 1 bis 9, **dadurch gekennzeichnet, dass** der Filter (F) zum Leiten der filtrierten Luft vom Fangkorb (GB) zum Gebläse (F) im Luftführungskanal zur Rückführung befestigt ist.

12. Maschine nach Anspruch 10 oder 11, **dadurch gekennzeichnet, dass** der Filter (F) im Fangkorb (GB) oder Luftführungskanal demontierbar getragen wird.

13. Maschine nach einem der vorangehenden Ansprüche, **dadurch gekennzeichnet, dass** das Gebläse (8) und das Messer (5) koaxial auf einer Endantriebswelle (6) der Antriebsquelle befestigt sind.

14. Maschine nach einem der vorangehenden Ansprüche, **gekennzeichnet durch** Räder zum Tragen der Maschine auf dem Boden.

15. Maschine nach einem der Ansprüche 1 bis 14, die darüber hinaus eine Ackerwalze besitzt.

16. Maschine nach einem der vorangehenden Ansprüche, **dadurch gekennzeichnet, dass** das Zugangsmittel eine Öffnung im Gehäuse (1) enthält.

17. Maschine nach einem der Ansprüche 2 und 9 bis 15, worin die Schnittkammer (3, VC) eine halbspiralige Konfiguration hat, welche eine Ausmündungsrinne hat, welche das Zugangsmittel (10, 20) im Fangkorb (GB) definiert.

## Revendications

1. Tondeuse à gazon comprenant un carter (1) qui définit une chambre de coupe (3) ouverte vers un sol de référence, un dispositif de coupe d'herbe (5) monté dans la chambre de coupe (3) pour rotation autour d'un axe sensiblement vertical, une source d'énergie (7), une transmission (6) reliant en entraînement la source d'énergie (7) et le dispositif de coupe d'herbe (5), un collecteur amovible d'herbe (GB), un moyen d'accès (10) permettant un accès direct entre la chambre de coupe (3) et le collecteur d'herbe (GB), au moins un ventilateur (8) pour engendrer un flux d'air sous pression, et un moyen pour guider l'air sous pression vers la chambre de coupe (3) afin de transporter l'herbe coupée hors de la chambre de coupe (3) par l'intermédiaire du moyen d'accès (10) et de l'amener directement dans le collecteur d'herbe (GB), **caractérisée par** un filtre (F) pour retenir l'herbe coupée dans le collecteur d'herbe (GB), et par un conduit pour diriger l'air ainsi filtré du collecteur d'herbe (GB) au ventilateur (8) pour remise en circulation dans la chambre de coupe (3).

2. Tondeuse à gazon comprenant un carter qui définit une chambre de coupe (VC) ouverte vers un sol de référence, un dispositif de coupe d'herbe (5) monté dans la chambre de coupe (VC) pour rotation autour d'un axe sensiblement vertical, une source d'énergie, une transmission reliant en entraînement la source d'énergie et le dispositif de coupe d'herbe (5), un collecteur amovible d'herbe (GB), un moyen d'accès (20) permettant un accès direct entre la chambre de coupe (VC) et le collecteur d'herbe (GB), au moins un ventilateur (8) pour engendrer un flux d'air sous pression, le carter étant configuré de manière à former un moyen de guidage de l'air sous pression à travers la chambre de coupe (VC) afin de transporter l'herbe coupée de la chambre de coupe (VC), par l'intermédiaire du moyen d'accès (20), directement dans le collecteur d'herbe (GB), dans laquelle il est prévu un filtre (F) pour retenir l'herbe coupée dans le collecteur d'herbe (GB), et un conduit pour diriger l'air ainsi filtré du collecteur d'herbe (GB) au ventilateur (8) afin de le remettre en circulation dans la chambre de coupe (VC).

3. Tondeuse selon la revendication 1, **caractérisée en ce qu'**elle comprend un moyen obligeant le flux d'air sous pression à s'écouler vers le bas et à l'extérieur du carter (1) afin de créer un coussin d'air pour supporter la machine au-dessus du sol de référence (GD).

4. Tondeuse selon la revendication 3, **caractérisée en ce qu'**elle comprend un capot extérieur (2) entourant sensiblement le carter (1) et définissant une chambre d'air (AC) entre le capot et le carter, le flux d'air sous pression étant dirigé vers le bas dans cette chambre de manière à créer le coussin d'air et à entrer dans la chambre de coupe (3).

5. Tondeuse selon la revendication 4, **caractérisée en ce que** le ventilateur (8) est monté dans la chambre d'air (AC), et dans laquelle le capot extérieur (2) comporte une entrée (9) pour l'air à mettre en pression par le ventilateur (8).

6. Tondeuse selon la revendication 4 ou 5, **caractérisée en ce que** l'air venant de la chambre d'air (AC) est aspiré vers la chambre de coupe (3) par un déséquilibre de pression créé pendant la remise en circulation d'air sous pression venant du collecteur d'herbe (GB).

7. Tondeuse selon une quelconque des revendications 4 à 6, **caractérisée en ce que** la chambre d'air (AC) constitue le moyen de guidage.

8. Tondeuse selon une quelconque des revendications 1 et 3 à 7, **caractérisée en ce que** le moyen d'accès est défini par un conduit allant de la chambre de coupe (3) au collecteur d'herbe (GB).

9. Tondeuse selon la revendication 2, **caractérisée en ce que** le moyen de guidage est en outre constitué par le dispositif de coupe d'herbe (5).

10. Tondeuse selon une quelconque des revendications 1. à 9, **caractérisée en ce que** le filtre (F) est monté à l'intérieur du collecteur d'herbe (GB).

11. Tondeuse selon une quelconque des revendications 1 à 9, **caractérisée en ce que** le filtre (F) est monté dans le conduit dirigeant l'air filtré du collecteur d'herbe (GB) au ventilateur (F) de remise en circulation.

12. Tondeuse selon la revendication 10 ou 11, **caractérisée en ce que** le filtre (F) est supporté de façon démontable dans le collecteur d'herbe (GB) ou le conduit.

13. Tondeuse selon une quelconque des revendications précédentes, **caractérisée en ce que** le ventilateur (8) et le dispositif de coupe d'herbe (5) sont montés coaxialement sur un arbre d'entraînement de sortie (6) de la source d'énergie (7).

14. Tondeuse selon une quelconque des revendications précédentes, **caractérisée en ce qu'**elle comprend des roues pour la supporter sur le sol.

15. Tondeuse selon une quelconque des revendications 1 à 14, comprenant en outre un rouleau.

16. Tondeuse selon une quelconque des revendications précédentes, **caractérisée en ce que** le moyen d'accès comprend une ouverture ménagée dans le carter (1).

17. Tondeuse selon une quelconque des revendications 2 et 9 à 15, dans laquelle la chambre de coupe (3, VC) a une configuration en semi-volute ayant un conduit de sortie qui définit le moyen d'accès (10, 20) au collecteur d'herbe (GB).
